# EUROPÄISCHE PATENTSCHRIFT

(11) **EP 0 772 962 B1**
(45) Veröffentlichungstag und Bekanntmachung des Hinweises auf die Patenterteilung: **28.02.2001**
(21) Anmeldenummer: 96116866.3
(22) Anmeldetag: 21.10.1996
(51) Int. Cl.: A01B 73/02

(54) **Verfahren und Vorrichtung zum Schwenken von Zinkenkreiseln für Vielkreiselheuwender**
Method and device for swinging the rake members of a haymaker
Procédé et dispositif pour pivoter les roues râteleuses d'une machine de fenaison

(30) Priorität: 07.11.1995 DE 19541355
(43) Veröffentlichungstag der Anmeldung: 14.05.1997
(73) Patentinhaber: CLAAS SAULGAU GMBH, D-88340 Saulgau (DE)
(72) Erfinder: Deni, Franz, 88348 Saulgau-Bogenweiler (DE)

(56) Entgegenhaltungen:
- EP-A- 0 165 638
- EP-A- 0 224 667
- EP-A- 0 289 864
- EP-A- 0 381 970
- EP-A- 0 464 387
- DE-A- 1 482 095
- DE-A- 4 322 263
- DE-U- 9 316 973
- FR-A- 2 005 280

## Beschreibung

Die Erfindung bezieht sich auf ein Verfahren und eine Vorrichtung zum Schwenken von Zinkenkreiseln für Vielkreiselheuwender, die von einem Traktor angetrieben werden und die von einer breiten Arbeitsstellung in eine schmale Transportstellung veränderbar sind, nach den Oberbegriffen der Patentansprüche 1 und 5.

Um in der Transportstellung möglichst geringe Breitenabmessungen zu erzielen, werden bei den bekannten Kreiselheuwendern (EP-B-0391 093 und EP-B 0464 387) mit einer Mehrzahl von Zinkenkreiseln die seitlichen Zinkenkreisel um vertikale Schwenkachsen am Mittelrahmen um teilweise mehr als 90° verschwenkt. Bei diesen Schwenkvorgängen kommt es infolge der ineinandergreifenden benachbarten Zinkenkreisel zur Kollision, und mitunter zur Blockade durch die sich gegenseitig berührenden Zinken. Deshalb wird das weitere Schwenken bis zur erforderlichen Endlage erschwert, bzw. unmöglich gemacht.

Der Erfindung liegt die Aufgabe zugrunde, mit einem geringen Aufwand einen behinderungs- u. kollisionsfreien Schwenkvorgang benachbarter Zinkenkreisel um den gesamten Schwenkwinkel zu ermöglichen.

Erfindungsgemäß wird dies durch die kennzeichnenden Merkmale der Patentansprüche 1 und 5 gelöst. Weitere vorteilhafte Ausgestaltungen sind Gegenstand der Unteransprüche.

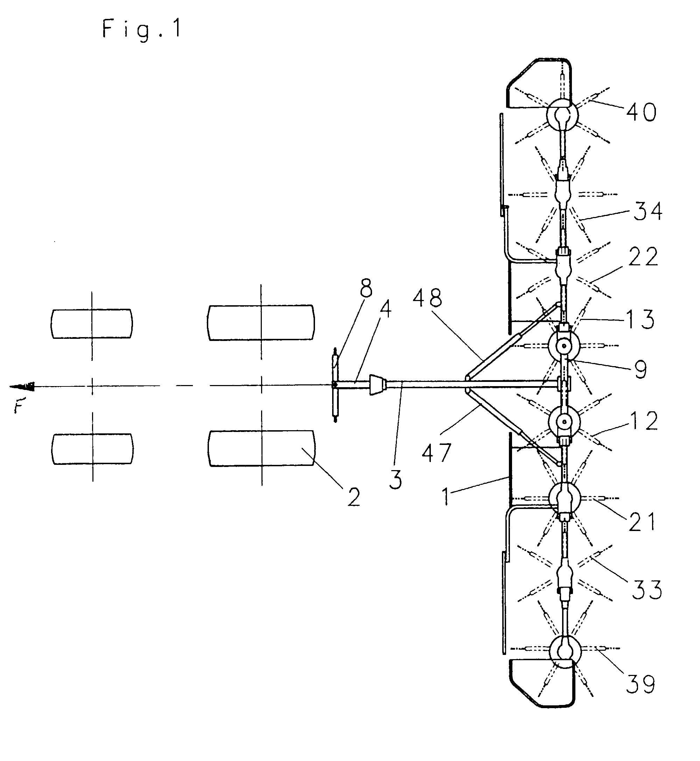

Die Erfindung wird nachstehend an einem Ausführungsbeispiel näher erläutert. In der zugehörigen Zeichnung zeigen
- Fig. 1: eine schematische Darstellung eines Kreiselheuwenders in der Draufsicht mit 8 Zinkenkreiseln in der Arbeitsstellung,
- Fig. 2: die Rückansicht eines Kreiselheuwenders mit angehobenen seitlichen und äußeren Zinkenkreiseln,

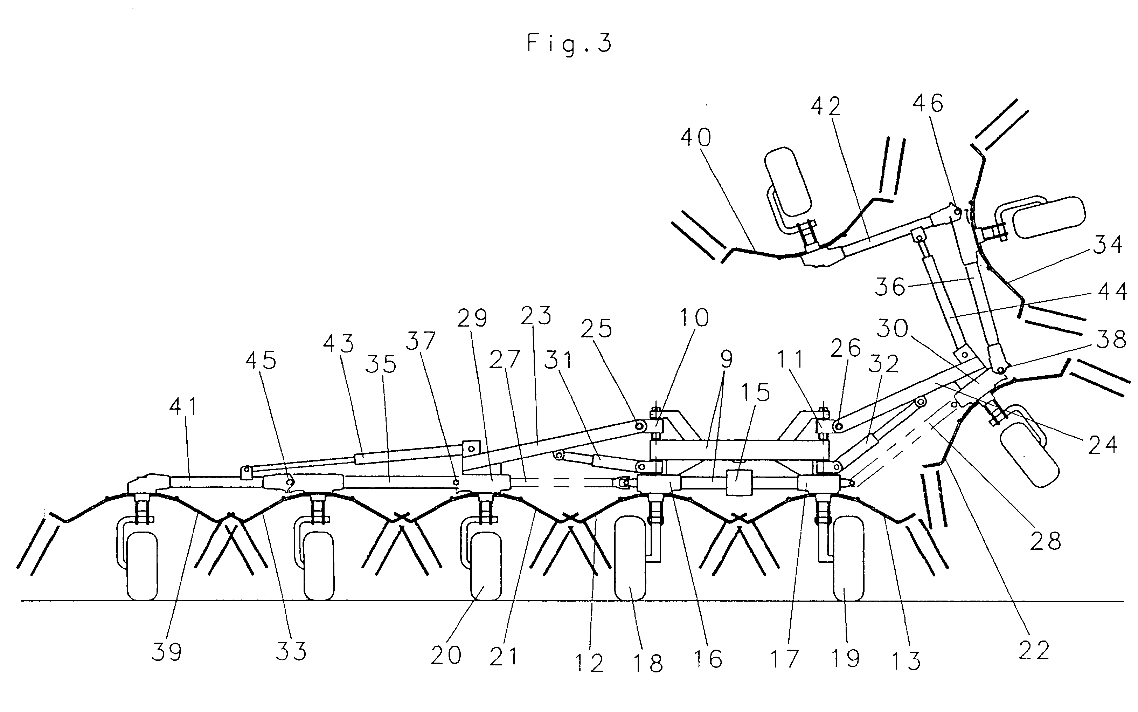

- Fig. 3: die Rückansicht eines Kreiselheuwenders, wobei die in Fahrtrichtung gesehen linke Seite die Arbeitsstellung und die rechte Seite die nach oben geschwenkten seitlichen u. äußeren Zinkenkreisel zeigt,

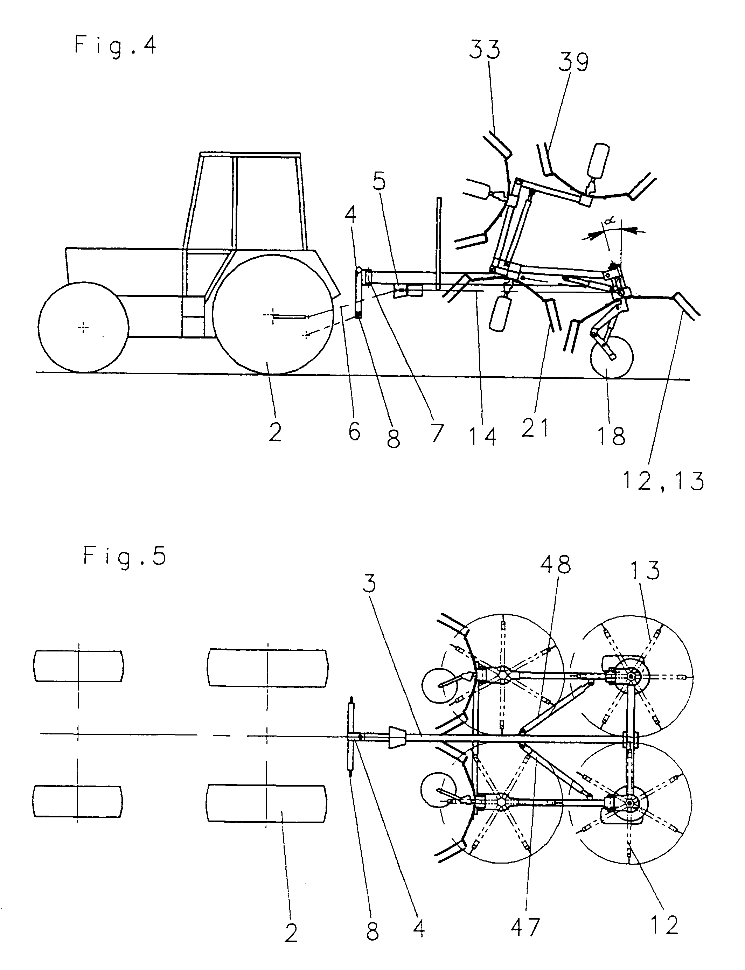

- Fig. 4: einen Kreiselheuwender in einer Seitenansicht der Transportstellung,
- Fig. 5: die Draufsicht nach Fig. 4.

Ein in der Zeichnung schematisch dargestellter Vielkreiselheuwender (1) mit mehreren gelenkig miteinander verbundenen Tragarmen und daran angeordneten Zinkenkreiseln wird von einem Traktor (2) gezogen und angetrieben. An einem in Fahrtrichtung (F) verlaufenden starren Rahmenträger (3) ist an der Vorderseite eine Zugdeichsel (4) und ein Anschluß (5) für eine Gelenkwelle (6) zum Traktor (2) angeordnet. Die Zugdeichsel (4) ist am Rahmenträger (3) an einer quer zur Fahrtrichtung (F) verlaufenden Achse (7) angelenkt. An der vorderen Seite ist die Zugdeichsel (4) mit der Zweipunktanhängung (8) des Traktors (2) verbunden. Am hinteren Ende des Rahmenträgers (3) ist quer an diesem ein Mittelrahmen (9) angeordnet. An den Mittelrahmen (9) schließen sich beidseitig mehrere um etwa vertikale Schwenkachsen (10, 11) schwenkbare Tragarme mit daran angeordneten Zinkenkreiseln an. An dem Mittelrahmen (9) sind zwei mittlere Zinkenkreisel (12, 13) und an den einzelnen Tragarmen ist jeweils ein Zinkenkreisel angeordnet. Der Antrieb der einzelnen Zinkenkreisel erfolgt vom Traktor (2) aus über eine Gelenkwelle (6). Von dieser aus erfolgt die Weiterleitung der Drehbewegung über eine unterhalb des Rahmenträgers (3) angeordnete Antriebswelle (14) zum Eingangsgetriebe (15) am Mittelrahmen (9). An das Eingangsgetriebe (15) schließen sich beidseitig innerhalb des Mittelrahmens (9) verlaufende Wellen an, die zu den Kreiselgetrieben (16, 17) der starr miteinander verbundenen mittleren Zinkenkreisel (12, 13) führen. Der Mittelrahmen (9) ist mit zwei höheneinstellbaren Transporträdern (18, 19) versehen, die unterhalb der Zinkenkreisel (12, 13) angebracht sind und die bei einer gezogenen Maschine in der Transport- und in der Arbeitsstellung ständig Bodenberührung haben. Unterhalb der anderen Zinkenkreisel sind Tasträder (20) angeordnet. Zur Erhöhung der Standfestigkeit des Vielkreiselheuwenders (1) in der Transport- und Arbeitsstellung weisen die beiden Transporträder (18, 19) eine größere Spurweite als die benachbarten Tasträder (20) auf. Zwischen dem Mittelrahmen (9) und den ersten seitlichen Zinkenkreiseln (21, 22) sind Verbindungsrahmen (23, 24) angeordnet, die um am Mittelrahmen (9) angebrachte horizontale Schwenkachsen (25, 26) nach oben und unten schwenkbar sind. Unterhalb der Verbindungsrahmen (23, 24) verlaufen Gelenkwellen (27, 28), die die Drehbewegung von den Kreiselgetrieben (16, 17) der mittleren Zinkenkreisel (12, 13) zu den Kreiselgetrieben (29, 30) der ersten seitlichen Zinkenkreisel (21, 22) übertragen. Zum Anheben, bzw. Senken der Verbindungsrahmen (23, 24) sind zwischen dem Mittelrahmen (9) und den Verbindungsrahmen (23, 24) Hydraulikzylinder (31, 32) angebracht. An die ersten seitlichen Zinkenkreisel (21, 22) schließen sich die zweiten seitlichen Zinkenkreisel (33, 34) an, die an seitlichen Tragarmen (35, 36) befestigt und über horizontal angeordnete Schwenkachsen (37, 38) mit den Kreiselgetrieben (29, 30) der ersten seitlichen Zinkenkreisel (21, 22) antriebsmäßig verbunden sind. Die sich gelenkig daran anschließenden äußeren Zinkenkreisel (39, 40) sind an äußeren Tragarmen (41, 42) angebracht. Zwischen den Verbindungsrahmen (23, 24) und den äußeren Tragarmen (41, 42) sind Hydraulikzylinder (43, 44) angeordnet, mit denen das Schwenken der äußeren Zinkenkreisel (39, 40) um die zugeordneten Schwenkachsen (45, 46) und der zweiten seitlichen Zinkenkreisel (33, 34) um die Schwenkachsen (37, 38) erfolgt. Das Schwenken der seitlichen und äusseren Zinkenkreisel (21, 22, 33, 34, 39, 40) von der Transport- in die Arbeitsstellung und umgekehrt, erfolgt um die oberhalb der Kreiselgetriebe (16, 17) der mittleren Zinkenkreisel (12, 13) am Mittelrahmen (9) angeordneten vertikalen Schwenkachsen (10, 11), die einen nach vorn gerichteten Neigungswinkel α von etwa 12° - 18° aufweisen. Zwischen dem Rahmenträger (3) und den seitlichen Verbindungsrahmen (23, 24) sind einfachwirkende Hydraulikzylinder (47, 48) angeordnet. Mit ihrer Hilfe werden die seitlichen und äußeren Zinkenkreisel von der Transportstellung in die Arbeitsstellung geschwenkt.

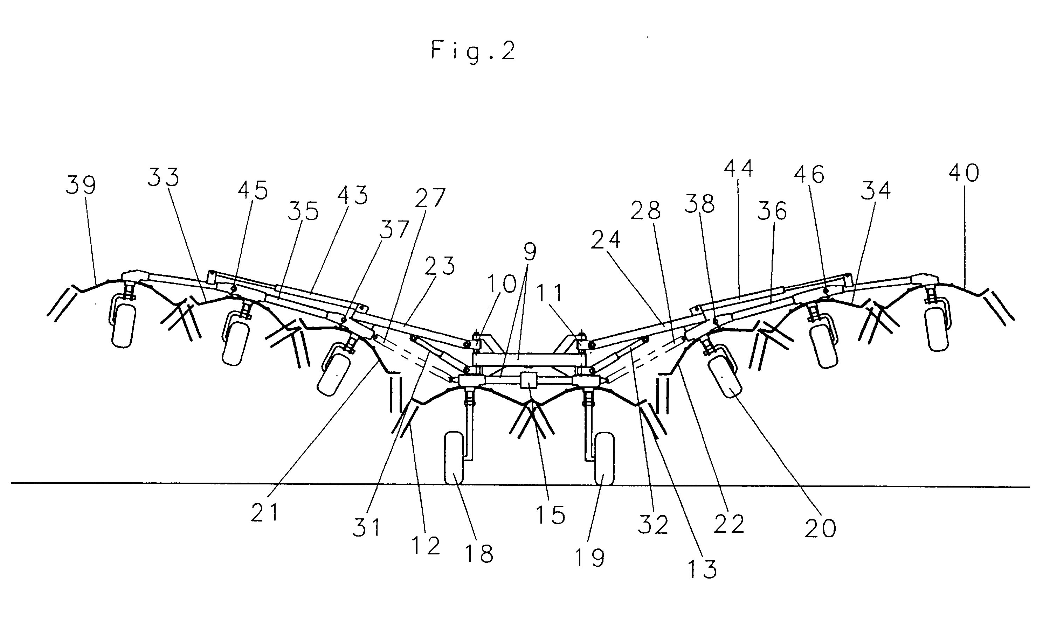

Bei der Umstellung des Vielkreiselheuwenders (1) von der Arbeits- in die Transportstellung werden zunächst die den mittleren Zinkenkreiseln (12, 13) benachbarten ersten seitlichen Zinkenkreisel (21, 22) mittels der Hydraulikzylinder (31, 32) um die horizontale Schwenkachsen (25, 26) um etwa 25° so weit nach oben geschwenkt, daß die ineinandergreifenden Zinkenkreisel außer Eingriff gelangen. Eine gegenseitige Berührung und Kollision der einzelnen Zinken der benachbarten Zinkenkreisel wird damit beim Schwenkvorgang in die Transportstellung ausgeschlossen. Diese in der Fig. 2 dargestellte Stellung mit angehobenen Zinkenkreiseln kann auch vorteilhafterweise beim Wendevorgang der Maschine am Feldrand benutzt werden, da hierbei keine Bodenberührung der seitlichen und äußeren Zinkenkreisel vorhanden ist und dadurch das Wenden wesentlich erleichtert wird. Nach dem Anheben der ersten seitlichen Zinkenkreisel (21, 22) werden die weiteren seitlichen und äußeren Zinkenkreisel (33, 34, 39, 40) über die Hydraulikzylinder (43, 44) nach oben geschwenkt. Nachdem die Hydraulikzylinder (47, 48) durch die Betätigung eines Hydraulikventils druckfrei geworden sind, schwenken die angehobenen seitlichen und äußeren Zinkenkreisel (21, 22, 33, 34, 39, 40) infolge der nach vorn geneigten vertikalen Schwenkachsen (10, 11) selbstätig um etwa 90° nach vorn und kommen dann in eine etwa parallel zum Rahmenträger (3) verlaufende Transportstellung.

In analoger Weise können die Zinkenkreisel um die vertikalen Schwenkachsen (10, 11) anstelle nach vorn auch nach hinten geschwenkt werden.

Eine weitere Variante für eine kollisionsfreie Verschwenkung der Zinkenkreisel besteht darin, daß die Verbindungsrahmen (23, 24) zu den seitlichen Zinkenkreiseln (21, 22) teleskopisch ausgebildet und daß diese vor dem Schwenkvorgang so weit nach außen bewegt werden, daß die Zinken der benachbarten Zinkenkreisel sich nicht mehr berühren können.

Außerdem ist auch eine Kombination der Ausführungen mit schwenkbaren und teleskopischen Verbindungsrahmen (23, 24) möglich. Hierbei ist der erforderliche Schwenkwinkel nach oben dann entsprechend geringer.

Ebenso ist es auch unter Beibehaltung des vorstehend beschriebenen Schwenkprinzips möglich, daß die zweiten seitlichen und äußeren Zinkenkreisel (33, 34, 39, 40) erst nach dem Schwenken in die Transportstellung nach oben in die Transportlage geschwenkt werden.

## Patentansprüche

1. Verfahren zum Schwenken von Zinkenkreiseln (21, 22, 33, 34, 39, 40) für Vielkreiselheuwender (1), die von einem Traktor (2) angetrieben werden und die von einer breiten Arbeitsstellung in eine schmale Transportstellung veränderbar sind und die einen etwa in Fahrtrichtung (F) verlaufenden Rahmenträger (3) und einen quer dazu angeordneten Mittelrahmen (9) aufweisen, an dem sich beidseitig mehrere schwenkbeweglich miteinander verbundene Tragarme (35, 36, 41, 42) und Verbindungsrahmen (23, 24) anschließen, wobei am Mittelrahmen (9) und an den Tragarmen (35, 36, 41, 42) und Verbindungsrahmen (23, 24) ineinandergreifende mittlere, seitliche und äußere Zinkenkreisel (12, 13, 21, 22, 33, 34, 39, 40) angeordnet sind, die sich in der Arbeitsstellung quer zur Fahrtrichtung (F) nebeneinander befinden und sich über Tasträder (18, 19, 20) auf dem Erdboden abstützen, wobei die an den Verbindungsrahmen (23, 24) angeordneten Zinkenkreisel (21, 22) von der Arbeitsstellung in die Transportstellung um am Mittelrahmen (9) angebrachte etwa vertikale Schwenkachsen (10, 11) um etwa 90° nach vorn oder hinten schwenkbar sind,
dadurch gekennzeichnet,
daß zunächst die den mittleren Zinkenkreiseln (12, 13) benachbarten ersten seitlichen Zinkenkreisel (21, 22) außer Eingriff gebracht werden und danach das Schwenken der seitlichen und äußeren Zinkenkreisel (21, 22, 33, 34, 39, 40) um die vertikalen Schwenkachsen (10, 11) in die Transportstellung erfolgt.

2. Verfahren nach Anspruch 1, dadurch gekennzeichnet, daß das Außereingriffbringen der mittleren Zinkenkreisel (12, 13) und der ersten seitlichen Zinkenkreisel (21, 22) durch ein Nachobenschwenken der seitlichen Zinkenkreisel (21, 22) um am Mittelrahmen (9) angeordnete horizontale Schwenkachsen (25, 26) erfolgt.

3. Verfahren nach Anspruch 1,
dadurch gekennzeichnet,
daß das Außereingriffbringen der mittleren Zinkenkreisel (12, 13) und der ersten seitlichen Zinkenkreisel (21, 22) durch eine quer zur Fahrtrichtung (F) gerichtete Abstandsvergrößerung der Zinkenkreisel (12, 13, 21, 22) zueinander erfolgt.

4. Verfahren nach Anspruch 1 bis 3, dadurch gekennzeichnet, daß das Aussereingriffbringen der mittleren Zinkenkreisel (12, 13) und der ersten seitlichen Zinkenkreisel (21, 22) durch ein kombiniertes Nachobenschwenken der seitlichen Zinkenkreisel (21, 22) um die horizontalen Schwenkachsen (25, 26) als auch durch eine Abstandsvergrößerung der Zinkenkreisel (12, 13, 21, 22) zueinander erfolgt.

5. Vorrichtung zum Schwenken von Zinkenkreiseln (21, 22, 33, 34, 39, 40) für Vielkreiselheuwender (1), die von einem Traktor (2) angetrieben werden und die von einer breiten Arbeitsstellung in eine schmale Transportstellung veränderbar sind und die einen etwa in Fahrtrichtung (F) verlaufenden Rahmenträger (3) und einen quer dazu angeordneten Mittelrahmen (9) aufweisen, an dem sich beidseitig mehrere schwenkbeweglich miteinander verbundene Tragarme (35, 36, 41, 42) und Verbindungsrahmen (23, 24) anschließen, wobei am Mittelrahmen (9) und an den Tragarmen (35, 36, 41, 42) und Verbindungsrahmen (23, 24) ineinandergreifende mittlere, seitliche und äußere Zinkenkreisel (12, 13, 21, 22, 33, 34, 39, 40) angeordnet sind, die sich in der Arbeitsstellung quer zur Fahrtrichtung (F) nebeneinander befinden und sich über Tasträder (18, 19, 20) auf dem Erdboden abstützen, wobei die an den Verbindungsrahmen (23, 24) angeordneten Zinkenkreisel (21, 22) von der Arbeitsstellung in die Transportstellung um am Mittelrahmen (9) angebrachte etwa vertikale Schwenkachsen (10, 11) um etwa 90° nach vorn oder hinten schwenkbar sind,
dadurch gekennzeichnet,
daß zwischen dem Mittelrahmen (9) und den Verbindungsrahmen (23, 24) Hydraulikzylinder (31, 32) zum Verschwenken der ersten seitlichen Zinkenkreisel (21, 22) um etwa horizontale Schwenkachsen (25, 26) angeordnet sind und das weitere Hydraulikzylinder (43, 44) vorgesehen sind, die das Verschwenken der mit den Verbindungsrahmen (23, 24) und Tragarmen (35, 36, 41, 42) verbundenen seitlichen und äußeren Zinkenkreisel (21, 22, 33, 34, 39, 40) um vertikale Schwenkachsen (10, 11) zulassen.

6. Vorrichtung nach Anspruch 5,
dadurch gekennzeichnet,
daß die am Mittelrahmen (9) angeordneten vertikalen Schwenkachsen (10, 11) einen nach vorn gerichteten Neigungswinkel (α) aufweisen.

7. Vorrichtung nach Anspruch 5,
dadurch gekennzeichnet,
daß die Verbindungsrahmen (23, 24) teleskopisch ausgebildet sind.

8. Vorrichtung nach Anspruch 5 und 7,
dadurch gekennzeichnet,
daß die Verbindungsrahmen (23, 24) sowohl um horizontale Schwenkachsen (25, 26) schwenkbar, als auch teleskopisch ausgebildet sind.

9. Vorrichtung nach Anspruch 5 und 8, dadurch gekennzeichnet, daß die Verbindungsrahmen (23, 24) sowohl um horizontale Schwenkachsen (25, 26) schwenkbar, als auch teleskopisch ausgebildet sind.

## Claims

1. A method of pivoting rotary rakes (21, 22, 33, 34, 39, 40) for multi-rotor hay tedders (1) which are driven by a tractor (2) and which are changeable from a wide working position into a narrow transport position and which have a frame carrier (3) extending substantially in the direction of travel (F) and a central frame (9) which is arranged transversely with respect to the frame carrier and to which are connected at both sides a plurality of pivotably movably interconnected carrier arms (35, 36, 41, 42) and connecting frames (23, 24), wherein arranged on the central frame (9) and on the carrier arms (35, 36, 41, 42) and connecting frames (23, 24) are central, lateral and outer rotary rakes (12, 13, 21, 22, 33, 34, 39, 40) which engage into each other and which in the working position are disposed in mutually juxtaposed relationship transversely with respect to the direction of travel (F) and which are supported on the ground by way of sensing wheels (18, 19, 20), wherein the rotary rakes (21, 22) which are arranged on the connecting frames (23, 24) are pivotable through about 90° forwardly or rearwardly from the working position into the transport position about substantially vertical pivot axes (10, 11) mounted to the central frame (9), characterised in that firstly the first lateral rotary rakes (21, 22) which are adjacent to the central rotary rakes (12, 13) are brought out of engagement and then pivotal movement of the lateral and outer rotary rakes (21, 22, 33, 34, 39, 40) occurs about the vertical pivot axes (10, 11) into the transport position.

2. A method according to claim 1 characterised in that the central rotary rakes (12, 13) and the first lateral rotary rakes (21, 22) are brought out of engagement by upward pivotal movement of the lateral rotary rakes (21, 22) about horizontal pivot axes (25, 26) arranged on the central frame (9).

3. A method according to claim 1 characterised in that the central rotary rakes (12, 13) and the first lateral rakes (21, 22) are brought out of engagement by an increase in the spacing of the rotary rakes (12, 13, 21, 22) relative to each other, said increase being directed transversely with respect to the direction of travel (F).

4. A method according to claims 1 to 3 characterised in that the central rotary rakes (12, 13) and the first lateral rotary rakes (21, 22) are brought out of engagement by a combined upward pivotal movement of the lateral rotary rakes (21, 22) about the horizontal pivot axes (25, 26) and also by an increase in the spacing of the rotary rakes (12, 13, 21, 22) relative to each other.

5. An apparatus for pivoting rotary rakes (21, 22, 33, 34, 39, 40) for multi-rotor hay tedders (1) which are driven by a tractor (2) and which are changeable from a wide working position into a narrow transport position and which have a frame carrier (3) extending substantially in the direction of travel (F) and a central frame (9) which is arranged transversely with respect to the frame carrier and to which are connected at both sides a plurality of pivotably movably interconnected carrier arms (35, 36, 41, 42) and connecting frames (23, 24), wherein arranged on the central frame (9) and on the carrier arms (35, 36, 41, 42) and connecting frames (23, 24) are central, lateral and outer rotary rakes (12, 13, 21, 22, 33, 34, 39, 40) which engage into each other and which in the working position are disposed in mutually juxtaposed relationship transversely with respect to the direction of travel (F) and which are supported on the ground by way of sensing wheels (18, 19, 20), wherein the rotary rakes (21, 22) which are arranged on the connecting frames (23, 24) are pivotable through about 90° forwardly or rearwardly from the working position into the transport position about substantially vertical pivot axes (10, 11) mounted to the central frame (9), characterised in that arranged between the central frame (9) and the connecting frames (23, 24) are hydraulic cylinders (31, 32) for pivoting the first lateral rotary rakes (21, 22) about substantially horizontal pivot axes (25, 26) and that there are provided further hydraulic cylinders (43, 44) which permit the pivotal movement of the lateral and outer rotary rakes (21, 22, 33, 34, 39, 40) which are connected to the connecting frames (23, 24) and carrier arms (35, 36, 41, 42) about vertical pivot axes (10, 11).

6. Apparatus according to claim 5 characterised in that the vertical pivot axes (10, 11) which are arranged on the central frame (9) have a forwardly directed angle of inclination (α).

7. Apparatus according to claim 5 characterised in that the connecting frames (23, 24) are telescopic.

8. Apparatus according to claim 5 and claim 7 characterised in that the connecting frames (23, 24) are both pivotable about horizontal pivot axes (25, 26) and also telescopic.

9. Apparatus according to claim 5 and claim 8 characterised in that the connecting frames (23, 24) are both pivotable about horizontal pivot axes (25, 26) and also telescopic.

## Revendications

1. Procédé pour faire pivoter des toupies à dents (21, 22, 33, 34, 39, 40) pour des faneuses (1) à plusieurs toupies tractées par un tracteur (2), qui peuvent être amenées d'une position de travail déployée, large, dans une position de transport étroite et qui présentent un longeron de châssis (3) qui s'étend sensiblement dans la direction de déplacement (F) et un châssis intermédiaire (9) qui est disposé transversalement à celui-ci et de chaque côté duquel sont prévus plusieurs bras-supports (35, 36, 41, 42) liés entre eux de manière à pouvoir pivoter ainsi que des châssis de liaison (23, 24), des toupies à dents médianes, latérales et extérieures (12, 13, 21, 22, 33, 34, 39, 40) qui s'interpénètrent étant disposées sur le châssis intermédiaire (9) ainsi que sur les bras-supports (35, 36, 41, 42) et les châssis de liaison (23, 24), lesquelles toupies à dents, dans la position de travail, transversalement à la direction de déplacement (F), sont disposées les unes à côté des autres et prennent appui sur le sol par l'intermédiaire de roues de jauge (18, 19, 20), les toupies à dents (21, 22) disposées sur les châssis de liaison (23, 24) pouvant être amenées de la position de travail dans la position de transport, par pivotement d'environ 90° vers l'avant ou vers l'arrière autour d'axes de pivotement (10, 11) disposés sensiblement verticalement sur le châssis intermédiaire (9), caractérisé en ce que tout d'abord on amène les premières toupies à dents (21, 22) latérales voisines des toupies à dents médianes (12, 13) hors de prise puis on fait pivoter les toupies à dents (21, 22, 33, 34, 39, 40) latérales et extérieures autour des axes de pivotement (10, 11) verticaux afin de les amener dans la position de transport.

2. Procédé selon la revendication 1, caractérisé en ce que pour amener hors de prise les toupies à dents (12, 13) médianes et les premières toupies à dents latérales (21, 22) on fait pivoter vers le haut les toupies à dents (21, 22) latérales autour d'axes de pivotement (25, 26) disposés horizontalement sur le châssis intermédiaire (9).

3. Procédé selon la revendication 1, caractérisé en ce que pour amener hors de prise les toupies à dents (12, 13) médianes et les premières toupies à dents latérales (21, 22) on augmente la distance entre les toupies à dents (12, 13, 21, 22) dans la direction transversale à la direction de déplacement.

4. Procédé selon les revendications 1 à 3, caractérisé en ce que pour amener hors de prise les toupies à dents (12, 13) médianes et les premières toupies à dents latérales (21, 22) on fait pivoter vers le haut les toupies à dents (21, 22) autour des axes de pivotement (25, 26) horizontaux et on augmente la distance entre les toupies à dents (12, 13, 21, 22).

5. Dispositif pour faire pivoter des toupies à dents (21, 22, 33, 34, 39, 40) pour des faneuses (1) à plusieurs toupies tractées par un tracteur (2), qui peuvent être amenées d'une position de travail déployée, large, dans une position de transport étroite et qui présentent un longeron de châssis (3) qui s'étend sensiblement dans la direction de déplacement (F) et un châssis intermédiaire (9) qui est disposé transversalement à celui-ci et de chaque côté duquel sont prévus plusieurs bras-supports (35, 36, 41, 42) liés entre eux de manière à pouvoir pivoter ainsi que des châssis de liaison (23, 24), des toupies à dents médianes, latérales et extérieures (12, 13, 21, 22, 33, 34, 39, 40) qui s'interpénètrent étant disposées sur le châssis intermédiaire (9) ainsi que sur les bras-supports (35, 36, 41, 42) et les châssis de liaison (23, 24), lesquelles toupies à dents, dans la position de travail, transversalement à la direction de déplacement (F), sont disposées les unes à côté des autres et prennent appui sur le sol par l'intermédiaire de roues de jauge (18, 19, 20), les toupies à dents (21, 22) disposées sur les châssis de liaison (23, 24) pouvant être amenées de la position de travail dans la position de transport, par pivotement d'environ 90° vers l'avant ou vers l'arrière autour d'axes de pivotement (10, 11) disposés sensiblement verticalement sur le châssis intermédiaire (9), caractérisé en ce que des vérins hydrauliques (31, 32) pour faire pivoter les premières toupies à dents (21, 22) autour d'axes de pivotement (25, 26) sensiblement horizontaux sont disposés entre le châssis intermédiaire (9) et les châssis de liaison (23, 24) et que des vérins hydrauliques (43, 44) supplémentaires sont prévus qui permettent de faire pivoter autour d'axes de pivotement (10, 11) verticaux les toupies à dents (21, 22, 33, 34, 39, 40) latérales et extérieures liées aux châssis de liaison (23, 24) et aux bras-supports (35, 36, 41, 42).

6. Dispositif selon la revendication 5, caractérisé en ce que les axes verticaux (10, 11) disposés sur le châssis intermédiaire (9) présentent un angle d'inclinaison (α) dirigé vers l'avant.

7. Dispositif selon la revendication 5, caractérisé en ce que les châssis de liaison (23, 24) sont télescopiques.

8. Dispositif selon les revendications 5 et 7, caractérisé en ce que les châssis de liaison (23, 24) sont conformés de manière à pouvoir pivoter autour d'axes de pivotement horizontaux (25, 26) et sont télescopiques.

9. Dispositif selon les revendications 5 et 8, caractérisé en ce que les châssis de liaison (23, 24) sont conformés de manière à pouvoir pivoter autour d'axes de pivotement horizontaux (25, 26) et sont télescopiques.
